# EUROPÄISCHE PATENTSCHRIFT

(11) **EP 4 185 488 B1**
(45) Veröffentlichungstag und Bekanntmachung des Hinweises auf die Patenterteilung: **21.02.2024**
(21) Anmeldenummer: 21745248.1
(22) Anmeldetag: 30.06.2021
(51) Int. Cl.: B60Q 1/14, B60Q 1/08, B60Q 1/24

(54) **VERFAHREN ZUM BETRIEB EINER BELEUCHTUNGSEINRICHTUNG UND KRAFTFAHRZEUG**
METHOD FOR OPERATING AN ILLUMINATING DEVICE, AND MOTOR VEHICLE
PROCÉDÉ POUR FAIRE FONCTIONNER UN DISPOSITIF D'ÉCLAIRAGE, ET VÉHICULE À MOTEUR

(30) Priorität: 24.07.2020 DE 102020119555
(43) Veröffentlichungstag der Anmeldung: 31.05.2023
(73) Patentinhaber: Audi AG, 85045 Ingolstadt (DE)
(72) Erfinder: SCHMIDT, Valentin, 86633 Neuburg a.d. Donau (DE); ARMBRUSTER, Tilman, 85057 Ingolstadt (DE); BERLITZ, Stephan, 86529 Schrobenhausen (DE)
(74) Vertreter: Lindner Blaumeier Patent- und Rechtsanwälte
(86) Internationale Anmeldenummer: PCT/EP2021/067985
(87) Internationale Veröffentlichungsnummer: WO 2022/017743

(56) Entgegenhaltungen:
- EP-A1- 2 165 881
- EP-A2- 2 065 253
- DE-A1- 19 822 142
- DE-A1-102009 039 179
- DE-A1-102011 004 937
- DE-A1-102012 001 017
- DE-A1-102012 020 412
- DE-A1-102014 221 647
- DE-A1-102016 121 536
- DE-A1-102016 124 933
- DE-A1-102017 119 394
- DE-A1-102019 001 889

## Beschreibung

Die Erfindung betrifft ein Verfahren zum Betrieb einer Beleuchtungseinrichtung eines Kraftfahrzeugs, wobei durch die Beleuchtungseinrichtung Licht in ein Leuchtvolumen abgestrahlt wird wobei eine Ansteuerbedingung ausgewertet wird, deren Erfüllung davon abhängt, ob das Leuchtvolumen ein Teilleuchtvolumen umfasst, durch das eine Fläche und/oder ein Umgebungsvolumen beleuchtet wird, die und/oder das durch eine infrastrukturseitige Leuchte beleuchtet wird, wobei bei Erfüllung der Ansteuerbedingung die Beleuchtungseinrichtung derart angesteuert wird, dass in das Teilleuchtvolumen Licht mit einer anderen Lichtintensität abgestrahlt wird als in ein außerhalb des Teilleuchtvolumens liegendes Restleuchtvolumen des Leuchtvolumens. Daneben betrifft die Erfindung ein Kraftfahrzeug mit einer Beleuchtungseinrichtung.

Bewegt sich ein Kraftfahrzeug bei Dunkelheit auf einer beleuchteten Straße, beispielsweise innerhalb einer Ortschaft, so soll die Ausleuchtung der Fahrbahn und der angrenzenden Bereiche, also insbesondere von Rad- und Gehwegen, mittels eines Abblendlichts beziehungsweise Stadtlichts erfolgen. Es ist daher beispielsweise aus der Druckschrift DE 10 2012 020 412 A1 bekannt, eine Fahrt des Kraftfahrzeugs innerhalb eines Ortes automatisch zu erkennen und mit Hilfe eines Fernlichtassistenten hierbei automatisch auf ein Abblendlicht zu wechseln. Die nächtliche Ortsfahrt wird dadurch erkannt, dass wenigstens eine Lichtquelle im Detektionsbereich einer Detektoreinrichtung als Straßenbeleuchtung klassifiziert wird und unter der Voraussetzung, dass ein Verlassen des Detektionsbereichs durch die Lichtquelle erkannt wird, eine nächtliche Ortsfahrt des Fahrzeugs erkannt wird.

Verfahren zur Erkennung einer Straßenbeleuchtung sind zudem aus den Druckschriften EP 2 165 881 A1, DE 10 2016 121 536 A1, und EP 2 065 253 A2 bekannt.

DE 10 2019 001 889 A1 offenbart ein Verfahren zur automatischen Steuerung von Lichtfunktionen in Abhängigkeit von erkannten Straßenlaternen. DE 10 2016 124 933 A1 schlägt vor, eine Lichtprojektion eines Scheinwerfers zur visuellen Information eines Fahrzeugführers zu nutzen. Weiter Ansätze zur Steuerung der Lichtverteilung eines Scheinwerfers sind aus den Druckschriften DE 10 2011 004 937 A1, DE 198 22 142 A1, DE 10 2014 221 647 A1, DE 10 2017 119 394 A1 und DE10 2009 039 179 A1 bekannt.

Aus der Druckschrift DE 10 2012 001 017 A1 ist ein Kraftfahrzeugscheinwerfer bekannt, bei dem eine lichttechnische Größe in Abhängigkeit der Fahrzeugumgebung automatisch bereichsweise verändert wird. Straßenbereiche, die von einer Straßenbeleuchtung bereits wenigstens teilweise, insbesondere bereits ausreichend hell, erleuchtet sind, können durch den Scheinwerfer gar nicht oder in geringerem Maße angeleuchtet werden.

Nachteilig hierbei ist, dass eine infrastrukturseitige Beleuchtung nicht in allen Fahrsituationen ein optimales Erkennen anderer Verkehrsteilnehmer, insbesondere von Fußgängern beziehungsweise Radfahrern auf Rad- beziehungsweise Gehwegen, ermöglicht. Beispielsweise ist es üblich, Straßenlaternen, zum Beispiel Natriumdampflampen, mit nahezu monochromatischem Licht zu nutzen, wodurch beispielsweise Farbunterschiede zwischen Fußgängern beziehungsweise Radfahrern und einem Hintergrund nicht in allen Fällen zum Kontrast beitragen. Auch bei relativ geringen Beleuchtungsintensitäten durch die infrastrukturseitige Beleuchtung ist eine Differenzierung von Farben nicht oder nur begrenzt möglich. Befinden sich Personen oder Objekte im Wesentlichen unmittelbar unter dem Lichtschwerpunkt einer infrastrukturseitigen Leuchte, resultiert nahezu kein Schattenwurf, wodurch die Erkennung dieser Objekte beziehungsweise Personen weiter erschweren sein kann.

Die genannten Faktoren können dazu beitragen, die Erkennung von Personen beziehungsweise Objekten durch den Fahrer des Fahrzeugs beziehungsweise durch Fahrerassistenzsysteme, die beispielsweise auf Bilderkennung basieren, zu erschweren.

Der Erfindung liegt somit die Aufgabe zugrunde, eine Erkennbarkeit von Objekten im Fahrzeugumfeld durch den Fahrer beziehungsweise durch ein bildbasiertes Fahrerassistenzsystem bei Dunkelheit, insbesondere bei einer Fahrt in geschlossenen Orten oder in anderen Bereichen mit infrastrukturseitiger Beleuchtung, zu verbessern.

Die Aufgabe wird erfindungsgemäß durch das eingangs genannte Verfahren zum Betrieb einer Beleuchtungseinrichtung eines Kraftfahrzeugs gelöst, wobei in das Teilleuchtvolumen Licht mit einer höheren Lichtintensität abgestrahlt wird als in das Restleuchtvolumen.

Der Erfindung liegt die Idee zugrunde, bei der Ausleuchtung des Fahrzeugumfelds zu berücksichtigen, welche Flächen beziehungsweise Umgebungsvolumen durch wenigstens eine infrastrukturseitige Leuchte bereits beleuchtet sind beziehungsweise beleuchtbar sind. Hierbei wird, insbesondere in den obig erwähnten Situationen, in denen die infrastrukturseitige Leuchte nicht zu einer optimalen Objekterkennung führt, die in diese Bereiche abgestrahlte Lichtintensitäten erhöht, um die obig erläuterten Nachteile zu vermeiden. In einigen Fahrsituationen kann jedoch die Beleuchtung durch die infrastrukturseitige Leuchte auch ausreichend sein, dass in einer nicht erfindungsgemäßen Alternative eine Ausleuchtung des Teilleuchtvolumens mit einer geringeren Lichtintensität erfolgen kann als die Ausleuchtung des Restleuchtvolumens.

Die infrastrukturseitige Leuchte kann insbesondere eine Straßenbeleuchtung, z. B. eine Straßenlaterne, sein. Es kann sich jedoch auch um eine Leuchte handeln, die primär dazu dient, einen Geh- oder Radweg zu beleuchten. Unter einer Lichtintensität kann insbesondere eine Intensität pro Raumwinkel verstanden werden. Hierbei kann eine Strahlstärke als Lichtintensität herangezogen werden, es ist jedoch auch möglich, eine photometrische Gewichtung gemäß der Empfindlichkeit des Auges durchzuführen, womit als Lichtintensität eine Lichtstärke herangezogen werden kann.

Das Restleuchtvolumen kann das gesamte Leuchtvolumen außerhalb des Teilleuchtvolumens umfassen. Insbesondere können auch mehrere Teilleuchtvolumen erkannt werden, die Flächen- beziehungsweise Umgebungsvolumen beleuchten, die durch die gleiche infrastrukturseitige Leuchte oder auch durch unterschiedliche infrastrukturseitige Leuchten beleuchtet werden beziehungsweise beleuchtbar sind.

Die Beleuchtungseinrichtung kann insbesondere dazu eingerichtet sein, einen Raumwinkel auszuleuchten, wobei die in den Raumwinkel abgestrahlte Lichtintensität für verschiedene Teilwinkelbereiche des Raumwinkels separat vorgebbar ist. Dies kann beispielsweise dadurch realisiert werden, dass die Beleuchtungseinrichtung mehrere Leuchtmittel, beispielsweise mehrere Leuchtdioden eines Schweinwerfers, umfasst. Alternativ oder ergänzend kann eine steuerbare Blende, beispielsweise ein LCD-Panel, genutzt werden, um die Helligkeit in verschiedenen Teilwinkelbereichen zu reduzieren. Entsprechende Beleuchtungseinrichtungen für Kraftfahrzeuge sind prinzipiell bekannt, beispielsweise örtlich auflösende Lichtsysteme, die beispielsweise als hochauflösende Projektionssysteme implementiert sein können, oder aus mehreren Segmenten gebildete Abblendlichter. Ergänzend oder alternativ zu normalen Scheinwerfern können beispielsweise zur Ausleuchtung des Nahbereichs auch Abbiegelichter, also beispielsweise Kurvenlichter oder Ähnliches, genutzt werden.

Die Beleuchtungseinrichtung kann ergänzend in Abhängigkeit weiterer Fahrzeugsysteme, also beispielsweise in Abhängigkeit einer Objektdetektion und/oder einer Fahrwerkselektronik und/oder einer Antriebselektronik und/oder eines Navigationssystems, gesteuert werden. Beispielsweise kann automatisch in Abhängigkeit eines Fahrwerkszustands ein ausgeleuchteter Raumwinkelbereich angepasst werden, um eine Beladung oder ein Nicken des Fahrzeugs zu kompensieren. Flächen- beziehungsweise Umgebungsvolumen, die durch eine infrastrukturseitige Leuchte beleuchtet werden, können beispielsweise durch ihre Richtung und ihre Distanz sowie durch ihren Radius beziehungsweise ihre Höhe und Breite und/oder Tiefe definiert sein. Auch der durch die Beleuchtungseinrichtung auszuleuchtende Bereich kann entsprechend definiert sein beziehungsweise es können die obig diskutierten Raumwinkel zur Definition des Leuchtvolumens bzw. Teilleuchtvolumens verwendet werden.

In das Teilleuchtvolumen wird Licht mit einer höheren Lichtintensität abgestrahlt als in das Restleuchtvolumen. Beispielsweise kann die in das Teilleuchtvolumen abgestrahlte Lichtintensität um wenigstens 20%, wenigstens 30% oder wenigstens 50% höher sein als die in das Restleuchtvolumen abgestrahlte Lichtintensität.

Eine intensive Ausleuchtung der Umgebung von infrastrukturseitigen Leuchten, also beispielsweise von Straßenlaternen, durch die fahrzeugeigene Beleuchtungseinrichtung führt zu einem verstärkten Kontrast von Personen oder Objekten zur Umgebung. Erfolgt beispielsweise die Ausleuchtung durch die infrastrukturseitige Leuchte weitgehend monochromatisch, kann eine Farbdifferenzierung durch zusätzliche Spektralanteile des Lichts der kraftfahrzeugseitigen Beleuchtungseinrichtung verbessert werden. Zudem werden Objekte beziehungsweise Personen durch die fahrzeugseitige Beleuchtungseinrichtung seitlich angeleuchtet, wodurch ein stärkerer Schattenwurf resultiert als bei einer im Wesentlichen vertikalen Beleuchtung, wie sie häufig für infrastrukturseitige Leuchten resultiert. Dies kann die Erkennung der Objekte beziehungsweise Personen durch den Fahrer beziehungsweise durch fahrzeugseitige Assistenzsysteme verbessern. Ergänzend führt eine Erhöhung der Helligkeit generell dazu, dass auch schwache Kontraste besser erkannt werden können.

Durch eine Sensoreinrichtung, insbesondere eine Kamera, können das Fahrzeugumfeld des Kraftfahrzeugs betreffende Bilddaten erfasst werden, wobei durch Auswertung der Bilddaten ermittelt wird, ob die infrastrukturseitige Leuchte vorhanden ist und/oder ob sie die Fläche und/oder das Umgebungsvolumen beleuchtet. Hierbei kann insbesondere eine Sensoreinrichtung des Kraftfahrzeugs genutzt werden. Es ist jedoch auch möglich, dass eine infrastrukturseitige Sensoreinrichtung oder eine Sensoreinrichtung eines weiteren Kraftfahrzeugs genutzt wird. Die Sensordaten oder aus diesen resultierende Verarbeitungsdaten können in diesen Fällen drahtlos, beispielsweise über eine Car2Car- beziehungsweise Car2X-Kommunikation an das Kraftfahrzeug bereitgestellt werden, innerhalb dem die weitere Verarbeitung, insbesondere die Prüfung der Ansteuerbedingung, erfolgen kann.

Durch Auswertung der Bilddaten kann die Leuchte im Umfeld erkannt werden, wobei insbesondere auch die Position und/oder Ausrichtung der Leuchte und somit das ausgeleuchtete beziehungsweise ausleuchtbare Umgebungsvolumen erkannt werden können. Eine Erkennung beziehungsweise Klassifikation von infrastrukturseitigen Leuchten ist an sich aus dem Stand der Technik, beispielsweise aus der eingangs genannten Druckschrift DE 10 2012 020 412 A1, bekannt. Hierbei können entsprechende Leuchten beispielsweise anhand ihrer Positionen in einer gewissen Höhe oberhalb der Straße beziehungsweise oberhalb von Geh- beziehungsweise Radwegen erkannt werden. Ergänzend oder alternativ kann die relative Bewegung zum Kraftfahrzeug bei einer Bewegung des Kraftfahrzeugs ausgewertet werden, um sie von anderen Lichtquellen, beispielsweise von Lichtquellen anderer Fahrzeuge, zu unterscheiden.

Ergänzend oder alternativ ist es möglich, durch Auswertung der Bilddaten beleuchtete Flächen im Fahrzeugumfeld unmittelbar zu erkennen, beispielsweise indem Kontrastsprünge erkannt werden. Die erkannten, durch Leuchten beleuchtete Flächen können unmittelbar im erfindungsgemäßen Verfahren berücksichtigt werden oder dazu genutzt werden, auf das ausgeleuchtete Umgebungsvolumen beziehungsweise die Position und Orientierung der Leuchte rückzuschließen.

Durch die oder eine Sensoreinrichtung kann Licht der infrastrukturseitigen Leuchte, insbesondere nach einer Reflexion an der beleuchteten Fläche, erfasst werden, wonach auf Basis von Sensordaten der Sensoreinrichtung eine das Spektrum dieses Lichts betreffende Spektralinformation ermittelt wird, wobei die Erfüllung der Ansteuerbedingung und/oder die Lichtintensität des in das Teilleuchtvolumen abgestrahlten Lichts von der Spektralinformation abhängt. Bei der Reflexion des Lichts an der beleuchteten Fläche kann es sich insbesondere um eine diffuse Reflexion handeln, die auch als Streuung bezeichnet wird. Vorzugsweise ist die Sensoreinrichtung eine kraftfahrzeugseitige Sensoreinrichtung. Wie obig erläutert können jedoch auch fahrzeugexterne Sensoreinrichtungen verwendet werden.

Wie obig erläutert kann insbesondere eine weitgehend monochromatische Beleuchtung der Fahrzeugumgebung durch eine infrastrukturseitige Leuchte problematisch bezüglich der robusten Detektion von Personen beziehungsweise Objekten sein. Werden hingegen Leuchten genutzt, die über ein relativ breites Spektrum Licht abstrahlen, beispielsweise Leuchtstoffröhren oder Ähnliches, ist unter Umständen keine Erhöhung der Lichtintensität in dem Teilleuchtvolumen oder eine geringere Erhöhung der Intensität erforderlich. Um eine unnötig starke Ausleuchtung zu vermeiden kann es daher vorteilhaft sein, die Spektralinformation auszuwerten.

Prinzipiell wäre es möglich, ein Spektrometer als Sensoreinrichtung zur Bestimmung der Spektralinformation zu nutzen. Da ein Spektrometer jedoch typischerweise nicht im Kraftfahrzeug verbaut ist, wäre zur Umsetzung des Verfahrens in diesem Fall ein relativ hoher technischer Aufwand erforderlich. Es kann daher eine Farbbildkamera genutzt werden, wie sie häufig ohnehin im Kraftfahrzeug vorhanden ist um die Spektralinformation zu ermitteln. Beispielsweise kann anhand eines Histogramms der im Bild auftretenden Farbwerte erkannt werden, ob die abgebildete Szene im Wesentlichen monochromatisch oder durch Licht mit breitem Spektrum ausgeleuchtet ist.

Durch die oder eine Sensoreinrichtung können die beleuchtete Fläche und/oder das Umgebungsvolumen zumindest teilweise abbildende Umgebungsdaten erfasst werden, wobei für ein durch die Umgebungsdaten abgebildetes Objekt eine Position des Objekts bezüglich der infrastrukturseitigen Leuchte und/oder eine Schatteneigenschaft eines durch das Objekt geworfenen Schattens bestimmt wird, wobei die Erfüllung der Ansteuerbedingung und/oder die Lichtintensität des in das Teilleuchtvolumen abgestrahlten Lichts von der Position und/oder der Schatteneigenschaft abhängt. Wie obig erläutert, kann eine Sensoreinrichtung des Kraftfahrzeugs oder eine externe Sensoreinrichtung verwendet werden.

Eingangs wurde bereits erläutert, dass insbesondere bei relativ schwach ausgeleuchteten Szenen ein Schattenwurf eines Objekts wesentlich zur Erkennbarkeit des Objekts beitragen kann. Wird nun anhand der Form des Schattens eines Objekts beziehungsweise anhand von dessen Abmessungen beziehungsweise anhand der Position des Objekts bezüglich der Leuchte erkannt, dass eine im Wesentlichen vertikale Beleuchtung erfolgt, die zu einem nur schwer erkennbaren Schattenwurf führt, kann die Ansteuerbedingung erfüllt sein beziehungsweise eine hohe Lichtintensität in das Teilleuchtvolumen eingestrahlt werden, um durch die zusätzliche Beleuchtung einen verstärkten Schattenwurf zu erreichen und hierdurch die Erkennbarkeit des Objekts zu verbessern.

In dem erfindungsgemäßen Verfahren kann anhand von digitalen Kartendaten bestimmt werden, ob die infrastrukturseitige Leuchte vorhanden ist. Ergänzend oder alternativ kann eine Position und/oder eine Ausrichtung der Leuchte durch digitale Kartendaten vorgegeben sein oder aus diesen ermittelt werden. Entsprechende digitale Kartendaten können beispielsweise durch ein Navigationssystem des Kraftfahrzeugs oder eine andere fahrzeuginterne Datenbank oder drahtlos durch eine fahrzeugexterne Datenbank bereitgestellt werden. Die Nutzung der digitalen Kartendaten kann besonders vorteilhaft mit einer sensorischen Erfassung der Leuchte beziehungsweise der beleuchteten Fläche beziehungsweise des beleuchteten Umgebungsvolumens kombiniert werden, womit beispielsweise festgestellt werden kann, ob die Leuchte aktuell betrieben wird oder nicht.

Die beleuchtete Fläche oder ein unterhalb der beleuchteten Fläche oder des Umgebungsvolumens oder der infrastrukturseitigen Leuchte liegender Umgebungsabschnitt kann klassifiziert werden, wobei die Erfüllung der Ansteuerbedingung und/oder die Lichtintensität des in das Teilleuchtvolumen abgestrahlten Lichts davon abhängt, ob die beleuchtete Fläche oder der Umgebungsabschnitt als Gehweg oder Radweg klassifiziert wird. Hierdurch können durch das erfindungsgemäße Verfahren insbesondere Gehwege beziehungsweise Radwege mit erhöhter Lichtintensität ausgeleuchtet werden, die durch infrastrukturseitige Leuchten teils nicht ausreichend stark beleuchtet werden, um eine robuste Objekterkennung in diesen Bereichen zu ermöglichen. Andererseits sind häufig Kraftfahrzeuge beziehungsweise der Streckenverlauf, Straßenmarkierungen und Ähnliches durch eine infrastrukturseitige Beleuchtung ausreichend gut zu erkennen, so dass die erfindungsgemäße Erhöhung der Lichtintensität beispielsweise ausschließlich für Gehwege beziehungsweise Radwege bzw. dort besonders stark erfolgen kann.

Die Klassifikation kann beispielsweise auf Basis von Bilddaten der oder einer Sensoreinrichtung, insbesondere einer kraftfahrzeugseitigen Sensoreinrichtung, erfolgen. Ergänzend oder alternativ können die bereits vorangehend erwähnten digitalen Kartendaten oder weitere digitale Kartendaten, beispielsweise Kartendaten eines Navigationssystems des Kraftfahrzeugs, zur Klassifikation herangezogen werden.

Neben dem erfindungsgemäßen Verfahren betrifft die Erfindung ein Kraftfahrzeug mit einer Beleuchtungseinrichtung und einer Steuereinrichtung, wobei die Steuereinrichtung dazu eingerichtet ist, gemäß dem erfindungsgemäßen Verfahren die Ansteuerbedingung auszuwerten und die Beleuchtungseinrichtung in Abhängigkeit der Erfüllung der Ansteuerbedingung anzusteuern. Die Beleuchtungseinrichtung kann insbesondere wie obig erläutert ausgebildet sein. Die Steuereinrichtung kann insbesondere dazu eingerichtet sein, eine Lichtintensität der Beleuchtungseinrichtung für verschiedene Teilleuchtvolumen des Leuchtvolumens separat zu steuern. Hierzu können beispielsweise mehrere Leuchtdioden der Beleuchtungseinrichtung durch eine separate Pulsweitenmodulation in ihrer Helligkeit gesteuert werden. Alternativ oder ergänzend kann eine lokal ansteuerbare Blende entsprechend angesteuert werden oder Ähnliches.

Vorzugsweise umfasst das Kraftfahrzeug wenigstens eine Sensoreinrichtung, um die obig erläuterten Informationen zu erfassen und im Rahmen der Auswertung der Ansteuerbedingung beziehungsweise zur Ermittlung einer Leuchtintensität, die in das Teilleuchtvolumen abgestrahlt werden soll, auszuwerten.

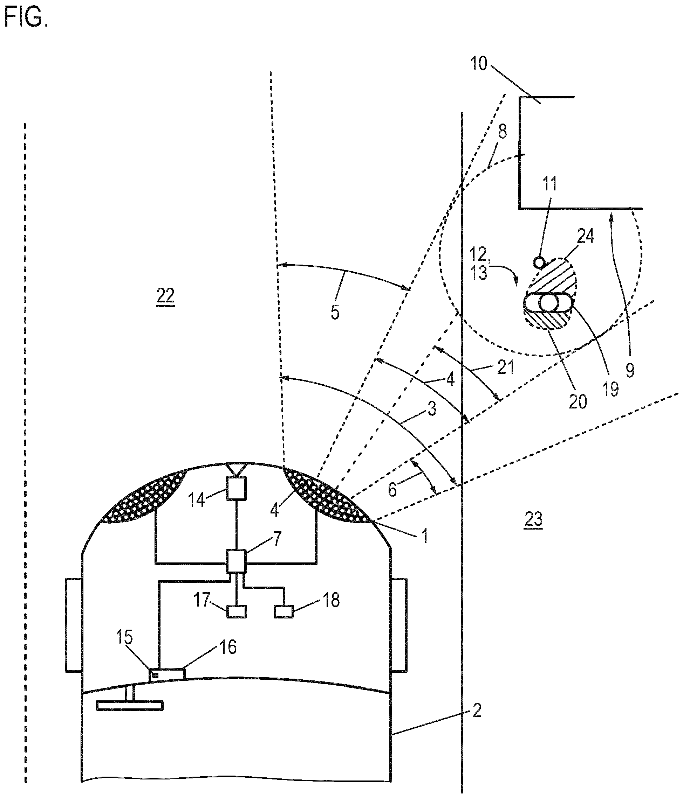

Weitere Vorteile und Einzelheiten der Erfindung ergeben sich aus den folgenden Ausführungsbeispielen und der zugehörigen Figur. Hierbei zeigt die Figur schematisch eine Fahrsituation, in der ein Ausführungsbeispiel des erfindungsgemäßen Verfahrens durch ein Ausführungsbeispiel des erfindungsgemäßen Kraftfahrzeugs durchgeführt wird.

Die Figur zeigt eine Fahrsituation, in der ein Kraftfahrzeug 2 entlang einer Straße 22 fährt. Bei einer Nachtfahrt wird neben der Straße 22 ein benachbart zu der Straße 22 befindlicher Gehweg 23 durch eine Beleuchtungseinrichtung 1 des Kraftfahrzeugs 2 zumindest teilweise ausgeleuchtet. Hierbei ist eine Steuereinrichtung 7 des Kraftfahrzeugs 2 dazu eingerichtet, die Beleuchtungseinrichtung 1 anzusteuern, um eine jeweilige in verschiedene Raumwinkelbereiche abgestrahlte Lichtintensität vorzugeben. Dies wird im gezeigten Beispiel dadurch realisiert, dass die Beleuchtungseinrichtung 1 durch eine Vielzahl einzelner Leuchtmittel 4, beispielsweise durch einzelne Leuchtdioden, gebildet ist. Alternativ oder ergänzend könnte beispielsweise auch eine steuerbare Blende, beispielsweise ein segmentiertes LCD-Panel, genutzt werden, um unterschiedliche Lichtintensitäten in unterschiedliche Raumwinkel abzustrahlen.

In dem gezeigten Beispiel wird ein Umgebungsvolumen 8 und somit auch ein dort befindliches Objekt 19, im Beispiel ein Fußgänger, durch eine infrastrukturseitige Leuchte 11 ausgeleuchtet. Die Leuchte 11 leuchtet zudem den Hintergrund, insbesondere die Fläche 9 des Hauses 10 und die Fläche 12, also die Oberfläche des Gehweg 23, zumindest teilweise aus.

In einigen Fällen, beispielsweise wenn eine weitgehend monochromatische Ausleuchtung erfolgt, kann hierbei der Kontrast zwischen dem Objekt 19 und dem Hintergrund sehr schwach sein, da in diesem Fall beispielsweise Farbunterschiede häufig nicht erkannt werden können. Da die infrastrukturseitige Leuchte 11 das Objekt 19 weitgehend vertikal beleuchtet, ist auch der Schatten 20 des Objekts 19 durch einen Fahrer des Kraftfahrzeugs 2 beziehungsweise durch dessen Sensoreinrichtung 14 kaum erkennbar, so dass es insgesamt wünschenswert ist, die Erkennbarkeit des Objekts 19 zu verbessern.

Daher wird durch die Steuereinrichtung 7 eine Ansteuerbedingung ausgewertet, deren Erfüllung davon abhängt, ob das Leuchtvolumen 3 ein Teilleuchtvolumen 4 umfasst, durch das eine Fläche 9, 12 beziehungsweise ein Umgebungsvolumen 8 beleuchtet wird oder beleuchtbar ist. Bei Erfüllung der Steuerbedingung wird die Beleuchtungseinrichtung derart angesteuert, dass in das Teilleuchtvolumen 4 Licht mit einer anderen Lichtintensität, nämlich mit höherer Lichtintensität, abgestrahlt wird, als in ein außerhalb des Teilleuchtvolumens 4 liegendes Restleuchtvolumen 5, 6 des Leuchtvolumens 3.

Da die Beleuchtungseinrichtung 1 näherungsweise weißes Licht oder zumindest Licht mit einer anderen spektralen Zusammensetzung als die infrastrukturseitige Leuchte 11 bereitstellen kann, kann hierdurch die Unterscheidbarkeit von Farben und somit der Kontrast zwischen Objekt 19 und Hintergrund verbessert werden. Zudem wird durch die näherungsweise horizontale Ausleuchtung des Objekts 19 durch die Beleuchtungseinrichtung 1 ein deutlich erkennbarerer Schatten 24 durch das Objekt 19 geworfen. Die Erhöhung der Gesamthelligkeit im Umfeld des Objekts 19 führt zudem ohnehin zu einer besseren Erkennbarkeit von schwachen Kontrasten in diesem Bereich. Somit wird insgesamt eine deutliche Verbesserung der Erkennbarkeit des Objekts 19 erreicht.

Das Vorhandensein der Leuchte 11 beziehungsweise des durch diese beleuchteten Umgebungsvolumens 8 beziehungsweise die beleuchteten Flächen 9, 12 kann durch Auswerten von Bilddaten der Sensoreinrichtung 14 erkannt werden. Alternativ oder ergänzend können Informationen bezüglich der Leuchte 11 durch digitale Kartendaten 15 bereitgestellt werden, die beispielsweise einem Navigationssystem 16 des Kraftfahrzeugs 2 entstammen können.

Das beschriebene Vorgehen kann prinzipiell stets genutzt werden, wenn eine infrastrukturseitige Leuchte 11 beziehungsweise beleuchtete Flächen 9, 12 beziehungsweise Umgebungsvolumen 8 erkannt werden. Eine unnötig starke Ausleuchtung des Fahrzeugumfelds kann jedoch einerseits den Energieverbrauch des Kraftfahrzeugs 2 erhöhen und andererseits unter Umständen störend für andere Verkehrsteilnehmer oder Anwohner wirken. Es ist daher vorteilhaft, eine stärkere Beleuchtung nur dann durchzuführen beziehungsweise nur für Bereiche durchzuführen, wenn dies beziehungsweise in denen dies tatsächlich zur verbesserten Objekterkennung notwendig beziehungsweise vorteilhaft ist. Die Erfüllung der Ansteuerbedingung beziehungsweise die im Teilleuchtvolumen 4 genutzte Lichtintensität kann somit von weiteren Faktoren abhängen.

Wie obig erläutert kann eine verstärkte Ausleuchtung durch die Beleuchtungseinrichtung 1 insbesondere dann zweckmäßig sein, wenn die infrastrukturseitige Leuchte 11 die Szene weitgehend monochromatisch ausleuchtet. Um dies zu erkennen, kann durch die Sensoreinrichtung 14 Licht der infrastrukturseitigen Leuchte erfasst werden, wonach, beispielsweise durch Auswertung der Bilddaten durch die Steuereinrichtung 7, eine Spektralinformation für dieses Licht ermittelt werden kann. Beispielsweise kann ein Histogramm für die Farben der Bildpunkte des Bildes ermittelt werden, wodurch anhand dieses Histogramms erkannt werden kann, ob eine schmalbandige oder breitbandige Ausleuchtung der Szene erfolgt. Die Steuereinrichtung 7 kann somit die Beleuchtungseinrichtung 1 beispielsweise nur dann zur verstärkten Ausleuchtung des Teilleuchtvolumens 4 ansteuern beziehungsweise dann eine besonders hohe Lichtintensität für diesen Teilleuchtbereich 4 vorgeben, wenn eine nahezu monochromatische Beleuchtung detektiert wird.

Die Sensordaten, insbesondere Bilddaten, der Sensoreinrichtung 14 können durch die Steuereinrichtung 7 auch ausgewertet werden, um eine Eigenschaft des Schattens 20 des Objekts 19 beziehungsweise die Position des Objekts 19 bezüglich der Lichtquelle 11 zu ermitteln. Dies kann dazu dienen, eine Ausleuchtung des Teilleuchtvolumens 4 mit höherer Intensität nur dann durchzuführen, beziehungsweise dann eine besonders hohe Lichtintensität zu nutzen, wenn anhand des Schattens 20 beziehungsweise der Position des Objekts 19 erkannt wird, dass eine starke Ausleuchtung zur Ausbildung eines besser erkennbaren Schattens 24 vorteilhaft sein kann.

Wie bereits erläutert, ist eine Ausleuchtung des Umfelds durch infrastrukturseitigen Leuchten häufig ausreichend, um Kraftfahrzeuge, Straßenmarkierungen und Ähnliches ohne weiteres zu erkennen. Daher soll primär eine verbesserte Ausleuchtung für Radwege beziehungsweise Gehwege erfolgen. Es ist somit möglich, dass die Fläche 12 beziehungsweise der unterhalb der Leuchte 11 beziehungsweise des Umgebungsvolumens 8 liegende Umgebungsabschnitt 13 klassifiziert wird, wobei es sich bei einem Großteil der ausgeleuchteten Fläche 12 im Beispiel um den Gehweg 23 handelt. Die Ansteuerbedingung kann nur dann erfüllt sein beziehungsweise es kann dann eine besonders starke Erhöhung der Lichtintensität genutzt werden, wenn die Fläche 12 beziehungsweise der Umgebungsabschnitt 13 als Gehweg oder Radweg klassifiziert wird.

Die beschriebenen Bedingungen können beispielsweise dazu führen, dass die Ansteuerbedingung im gezeigten Beispiel nur für ein schmaleres Teilleuchtvolumen 21 erfüllt ist, da eine Erhöhung der Lichtintensität in diesem Teilleuchtvolumen ausreicht, um eine Erkennung des Objekts 19 deutlich zu verbessern.

## Patentansprüche

1. Verfahren zum Betrieb einer Beleuchtungseinrichtung (1) eines Kraftfahrzeugs (2), wobei durch die Beleuchtungseinrichtung (1) Licht in ein Leuchtvolumen (3) abgestrahlt wird, wobei eine Ansteuerbedingung ausgewertet wird, deren Erfüllung davon abhängt, ob das Leuchtvolumen (3) ein Teilleuchtvolumen (4, 21) umfasst, durch das eine Fläche (9, 12) und/oder ein Umgebungsvolumen (8) beleuchtet wird, die und/oder das durch eine infrastrukturseitige Leuchte (11) beleuchtet wird, wobei bei Erfüllung der Ansteuerbedingung die Beleuchtungseinrichtung (1) derart angesteuert wird, dass in das Teilleuchtvolumen (4, 21) Licht mit einer anderen Lichtintensität abgestrahlt wird als in ein außerhalb des Teilleuchtvolumens (4, 21) liegendes Restleuchtvolumen (5, 6) des Leuchtvolumens (3),
**dadurch gekennzeichnet,**
**dass** in das Teilleuchtvolumen (4, 21) Licht mit einer höheren Lichtintensität abgestrahlt wird als in das Restleuchtvolumen (5, 6).

2. Verfahren nach Anspruch 1,
**dadurch gekennzeichnet,**
**dass** durch eine Sensoreinrichtung (14), insbesondere eine Kamera, das Fahrzeugumfeld des Kraftfahrzeugs (2) betreffende Bilddaten erfasst werden, wobei durch Auswertung der Bilddaten ermittelt wird, ob die infrastrukturseitige Leuchte (11) vorhanden ist und/oder ob sie die Fläche (9, 12) und/oder das Umgebungsvolumen (8) beleuchtet.

3. Verfahren nach einem der vorangehenden Ansprüche,
**dadurch gekennzeichnet,**
**dass** durch die oder eine Sensoreinrichtung (14) Licht der infrastrukturseitigen Leuchte (11), insbesondere nach einer Reflexion an der beleuchteten Fläche (9, 12), erfasst wird, wonach auf Basis von Sensordaten der Sensoreinrichtung (14) eine das Spektrum dieses Lichts betreffende Spektralinformation ermittelt wird, wobei die Erfüllung der Ansteuerbedingung und/oder die Lichtintensität des in das Teilleuchtvolumen (4, 21) abgestrahlten Lichts von der Spektralinformation abhängt.

4. Verfahren nach einem der vorangehenden Ansprüche,
**dadurch gekennzeichnet,**
**dass** durch die oder eine Sensoreinrichtung (14) die beleuchtete Fläche (9, 12) und/oder das Umgebungsvolumen (8) zumindest teilweise abbildende Umgebungsdaten erfasst werden, wobei für ein durch die Umgebungsdaten abgebildetes Objekt (19) eine Position des Objekts (19) bezüglich der infrastrukturseitigen Leuchte (11) und/oder eine Schatteneigenschaft eines durch das Objekt (19) geworfenen Schattens (20) bestimmt wird, wobei die Erfüllung der Ansteuerbedingung und/oder die Lichtintensität des in das Teilleuchtvolumen (4, 21) abgestrahlten Lichts von der Position und/oder der Schatteneigenschaft abhängt.

5. Verfahren nach einem der vorangehenden Ansprüche,
**dadurch gekennzeichnet,**
**dass** anhand von digitalen Kartendaten (15) bestimmt wird, ob die infrastrukturseitige Leuchte (11) vorhanden ist.

6. Verfahren nach einem der vorangehenden Ansprüche,
**dadurch gekennzeichnet,**
**dass** die beleuchtete Fläche (12) oder ein unterhalb der beleuchteten Fläche (9) oder des Umgebungsvolumens (8) oder der infrastrukturseitigen Leuchte (11) liegender Umgebungsabschnitt (13) klassifiziert wird, wobei die Erfüllung der Ansteuerbedingung und/oder die Lichtintensität des in das Teilleuchtvolumen (4, 21) abgestrahlten Lichts davon abhängt, ob die beleuchtete Fläche (12) oder der Umgebungsabschnitt (13) als Gehweg (23) oder Radweg klassifiziert wird.

7. Kraftfahrzeug (2) mit einer Beleuchtungseinrichtung (1) und einer Steuereinrichtung (7),
**dadurch gekennzeichnet,**
**dass** die Steuereinrichtung (7) dazu eingerichtet ist, gemäß dem Verfahren nach einem der vorangehenden Ansprüche die Ansteuerbedingung auszuwerten und die Beleuchtungseinrichtung (1) in Abhängigkeit der Erfüllung der Ansteuerbedingung anzusteuern.

## Claims

1. Method for operating an illuminating device (1) of a motor vehicle (2), wherein the illuminating device (1) radiates light into a luminous volume (3), wherein a control condition is evaluated, the fulfilment of which depends on whether the luminous volume (3) comprises a partial luminous volume (4, 21) which illuminates an area (9, 12) and/or an ambient volume (8) which is illuminated by an infrastructure lamp (11), wherein, when the control condition is fulfilled, the illuminating device (1) is controlled in such a manner that light is radiated into the partial luminous volume (4, 21) with a different light intensity than into a residual luminous volume (5, 6) of the luminous volume (3) that is outside the partial luminous volume (4, 21),
**characterized**
**in that** light is radiated into the partial luminous volume (4, 21) with a higher light intensity than into the residual luminous volume (5, 6).

2. Method according to Claim 1,
**characterized**
**in that** a sensor device (14) in particular a camera, captures image data relating to the vehicle environment of the motor vehicle (2), wherein evaluation of the image data is used to determine whether the infrastructure lamp (11) is present and/or whether it illuminates the area (9, 12) and/or the ambient volume (8).

3. Method according to one of the preceding claims,
**characterized**
**in that** the sensor device or a sensor device (14) captures light from the infrastructure lamp (11), in particular after reflection at the illuminated area (9, 12), after which spectral information relating to the spectrum of this light is determined on the basis of sensor data from the sensor device (14), wherein the fulfilment of the control condition and/or the light intensity of the light radiated into the partial luminous volume (4, 21) depend(s) on the spectral information.

4. Method according to one of the preceding claims,
**characterized**
**in that** the sensor device or a sensor device (14) captures ambient data at least partially representing the illuminated area (9, 12) and/or the ambient volume (8), wherein, for an object (19) represented by the ambient data, a position of the object (19) with respect to the infrastructure lamp (11) and/or a shadow property of a shadow (20) cast by the object (19) is/are determined, wherein the fulfilment of the control condition and/or the light intensity of the light radiated into the partial luminous volume (4, 21) depend(s) on the position and/or the shadow property.

5. Method according to one of the preceding claims,
**characterized**
**in that** digital map data (15) are used to determine whether the infrastructure lamp (11) is present.

6. Method according to one of the preceding claims,
**characterized**
**in that** the illuminated area (12) or an ambient section (13) below the illuminated area (9) or the ambient volume (8) or the infrastructure lamp (11) is classified, wherein the fulfilment of the control condition and/or the light intensity of the light radiated into the partial luminous volume (4, 21) depend(s) on whether the illuminated area (12) or the ambient section (13) is classified as a footpath (23) or a cycle path.

7. Motor vehicle (2) having an illuminating device (1) and a control device (7),
**characterized**
**in that** the control device (7) is configured to evaluate the control condition in accordance with the method according to one of the preceding claims and to control the illuminating device (1) on the basis of the fulfilment of the control condition.

## Revendications

1. Procédé pour faire fonctionner un dispositif d'éclairage (1) d'un véhicule automobile (2), dans lequel de la lumière est émise par le dispositif d'éclairage (1) dans un volume d'éclairage (3), une condition de commande faisant l'objet d'une évaluation, dont la satisfaction dépend du fait que le volume d'éclairage (3) comprenne un volume d'éclairage partiel (4, 21), par lequel une surface (9, 12) et/ou un volume environnant (8) est/sont éclairé(e) (s), qui est/sont éclairé(e) (s) par un éclairage (11) côté infrastructure, le dispositif d'éclairage (1) étant commandé, lorsque la condition de commande est satisfaite, de telle sorte que de la lumière d'une intensité lumineuse différente est émise dans le volume d'éclairage partiel (4, 21) par rapport à un volume d'éclairage résiduel (5, 6) du volume d'éclairage (3) situé à l'extérieur du volume d'éclairage partiel (4, 21),
**caractérisé**
**en ce que** de la lumière d'une intensité lumineuse plus élevée est émise dans le volume d'éclairage partiel (4, 21) que dans le volume d'éclairage résiduel (5, 6).

2. Procédé selon la revendication 1,
**caractérisé**
**en ce que** des données d'image concernant l'environnement du véhicule automobile (2) sont enregistrées par un dispositif de détection (14), notamment une caméra, une évaluation des données d'image permettant de déterminer si l'éclairage (11) côté infrastructure est présent et/ou s'il éclaire la surface (9, 12) et/ou le volume environnant (8).

3. Procédé selon l'une des revendications précédentes, **caractérisé**
**en ce que** la lumière de l'éclairage (11) côté infrastructure est détectée par le ou un dispositif de détection (14), en particulier après une réflexion sur la surface éclairée (9, 12), après quoi une information spectrale concernant le spectre de cette lumière est déterminée sur la base de données de détection provenant du dispositif de détection (14), la satisfaction de la condition de commande et/ou l'intensité lumineuse de la lumière émise dans le volume d'éclairage partiel (4, 21) dépendant de l'information spectrale.

4. Procédé selon l'une des revendications précédentes, **caractérisé**
**en ce que** des données d'environnement reproduisant au moins partiellement la surface éclairée (9, 12) et/ou le volume environnant (8) sont détectées par le ou un dispositif de détection (14), une position de l'objet (19) par rapport à l'éclairage (11) côté infrastructure et/ou une caractéristique d'ombre d'une ombre (20) projetée par l'objet (19) étant déterminée pour un objet (19) reproduit par les données d'environnement, la satisfaction de la condition de commande et/ou l'intensité lumineuse de la lumière émise dans le volume d'éclairage partiel (4, 21) dépendant de la position et/ou de la caractéristique d'ombre.

5. Procédé selon l'une des revendications précédentes, caractérisé
des données cartographiques numériques (15) sont utilisées pour déterminer si l'éclairage côté infrastructure (11) est présent.

6. Procédé selon l'une des revendications précédentes, **caractérisé**
**en ce que** la surface éclairée (12) ou une partie environnante (13) située en dessous de la surface éclairée (9) ou du volume environnant (8) ou de l'éclairage (11) côté infrastructure fait l'objet d'un classement, la satisfaction de la condition de commande et/ou l'intensité lumineuse de la lumière émise dans le volume d'éclairage partiel (4, 21) dépendant du fait que la surface éclairée (12) ou la partie environnante (13) soit classée comme étant un trottoir (23) ou une piste cyclable.

7. Véhicule automobile (2) avec un dispositif d'éclairage (1) et un dispositif de commande (7),
**caractérisé**
**en ce que** le dispositif de commande (7) est conçu de façon à évaluer la condition de commande selon le procédé selon l'une des revendications précédentes et de façon à commander le dispositif d'éclairage (1) en fonction de la satisfaction de la condition de commande.
